# EUROPÄISCHE PATENTANMELDUNG

(11) **EP 3 296 688 A1**
(43) Veröffentlichungstag der Anmeldung: **21.03.2018**
(21) Anmeldenummer: 16189721.0
(22) Anmeldetag: 20.09.2016
(51) Int. Cl.: G01B 11/275, G01M 17/00

(54) **VERFAHREN UND VORRICHTUNG ZUR STEREO-PHOTOGRAMMETRISCHEN VERMESSUNG VON UNTERSCHIEDLICHEN OBJEKTEN**

(71) Anmelder: VisiCon Automatisierungstechnik GmbH, 37130 Gleichen-Wöllmarshausen (DE)
(72) Erfinder: Brunk, Wolfgang, 37130 Gleichen-Wöllmarshausen (DE)
(74) Vertreter: REHBERG HÜPPE + PARTNER

(57) **Zusammenfassung**

Zur stereo-photogrammetrischen Vermessung von unterschiedlichen Objekten (2) werden nebeneinander angeordnete Beleuchtungslinien auf eine Oberfläche (6) des Objekts (2) projiziert, indem ein zu jedem Zeitpunkt in einem Auftreffpunkt (36) auf die Oberfläche (6) des jeweiligen Objekts (2) auftreffender Laserstrahl (9) definiert in Richtung von zwei Raumwinkeln abgelenkt wird, wobei definierte Bereiche des jeweiligen Objekts, die zwischen den unterschiedlichen Objekten variieren, mit den Auftreffpunkten (36) des Laserstrahls (9) ausgespart werden. Die Oberfläche (6) des Objekts (2) wird in Bildern aus zwei unterschiedlichen Abbildungsrichtungen (18, 19) abgebildet, wobei eine von den beiden Abbildungsrichtungen aufgespannte Ebene die Oberfläche in einer Schnittlinie schneidet, die längs den Beleuchtungslinien verläuft, und das Projizieren der Beleuchtungslinien wird derart mit dem Abbilden der Oberfläche (6) des Objekts (2) synchronisiert, dass Abbilder der Beleuchtungslinien in den Bildern durch während einer Belichtung des jeweiligen Bilds aufeinanderfolgende Auftreffpunkte (36) des Laserstrahls (9) auf die Oberfläche (6) des Objekts (2) ausgebildet werden.

## Beschreibung

### TECHNISCHES GEBIET DER ERFINDUNG

Die Erfindung betrifft bezieht sich auf ein Verfahren zur stereo-photogrammetrischen Vermessung von unterschiedlichen Objekten mit den im Oberbegriff des Patentanspruchs 1 definierten Schritten. Weiterhin bezieht sich die Erfindung auf eine Vorrichtung zur Durchführung eines solchen Verfahrens.

Mithin betrifft die vorliegende Erfindung ein kontaktloses Verfahren und eine kontaktlos arbeitende Vorrichtung zur stereo-photogrammetrischen Vermessung von unterschiedlichen Objekten, die beispielsweise zur Bestimmung der Achsgeometrien von Fahrzeugen mit unterschiedlichen Rädern verwendet werden können. In der praktischen Verwendung werden die Verfahrensschritte dann an allen Rädern des jeweiligen Fahrzeugs durchgeführt und entsprechend sind den einzelnen Rädern separate Vorrichtungen zur Durchführung des Verfahrens zugeordnet, die aber in einer festen räumlichen Beziehung zueinander stehen.

Das kontaktlose Verfahren und die kontaktlos arbeitende Vorrichtung der vorliegenden Erfindung zur stereo-photogrammetrischen Vermessung von unterschiedlichen Objekten können auch zu vielen anderen Zwecken eingesetzt werden, beispielsweise zur Aufnahme biometrischer Daten oder zur Gesichtserkennung oder Identitätsprüfung auf Basis bereits vorhandener biometrischer Daten.

### STAND DER TECHNIK

Ein Verfahren mit den Merkmalen des Oberbegriffs des Patentanspruchs 1 zur Bestimmung der Achsgeometrien von Fahrzeugen und eine Vorrichtung zu seiner Durchführung sind aus der EP 2 047 211 B1 bekannt. Hier wird jede einer Vielzahl von Beleuchtungslinie mit Hilfe einer eigenen Laserlichtquelle auf eine Reifenwand des jeweiligen Rads projiziert. Die Laserlichtquellen können einzeln ein- und ausgeschaltet werden, um das Zuordnen der Abbilder der Beleuchtungslinien in den aus den unterschiedlichen Abbildungsrichtungen aufgenommenen Bildern zu den einzelnen auf die Reifenwand projizierten Beleuchtungslinien zu erleichtern. In der praktischen Umsetzung weist jede Laserlichtquelle eine Laserdiode und eine davor angeordnete Zylinderlinse auf, die einen von der Laserdiode emittierten Laserstrahl horizontal in Richtung der jeweiligen Beleuchtungslinie auffächert. Jeweils acht solcher Laserlichtquellen sind zu einem Block zusammengefasst, der gegenüber den Kameras in vertikaler und horizontaler Richtung ausrichtbar ist, um die Beleuchtungslinien optimal gegenüber der Reifenwand des jeweiligen Rads auszurichten. Optimal bedeutet dabei, dass ein möglichst großer Längenanteil der Beleuchtungslinien auf die Reifenwand fällt. Die optimale Ausrichtung der Blöcke der Laserlichtquellen auf aufeinander folgende unterschiedliche Räder ist aufwändig. Auch die Montage der einzelnen Blöcke von Laserlichtquellen, d. h. die genaue Anordnung der Laserdioden und der davor liegenden Zylinderlinsen, um in möglichst gleichem Abstand übereinander angeordnete Beleuchtungslinien auszubilden, ist aufwändig. Für eine große statistische Basis bei der Bestimmung der Achsgeometrie werden bei dem bekannten Verfahren 64 Beleuchtungslinien auf die Reifenwand projiziert. Entsprechend sind 8 Blöcke von Laserlichtquellen vorgesehen. Hinzu kommen in der Praxis weitere Laserlichtquellen, mit denen vertikale Beleuchtungslinien auf eine Kotflügelkante oberhalb der Radachse projiziert werden, um die Höhe der Karosserie des jeweiligen Fahrzeugs zu erfassen.

Aus der EP 0 280 941 A1 sind ein Verfahren zur Bestimmung der Achsgeometrie eines Fahrzeugs mit den Schritten Projizieren von Beleuchtungslinien auf eine Reifenwand eines Rads in vor und hinter einer Radachse des Rads liegenden Bereichen und Abbilden der Reifenwand in Bildern sowie eine entsprechende Vorrichtung zur kontaktlosen Bestimmung der Achsgeometrie eines Fahrzeugs bekannt. Auch hier werden Laserstrahlen fächerförmig aufgeweitet, um die Beleuchtungslinien auszubilden, und jede Beleuchtungslinie wird mit einer Kamera aus einer Abbildungsrichtung abgebildet, die unter einem Winkel zu der Richtung verläuft, unter der die Beleuchtungslinie auf die Reifenwand projiziert wird. Die Lage einzelner Punkte der Beleuchtungslinie auf der Reifenwand gegenüber einer die Beleuchtungslinien projizierenden Lichtquelle und der Kamera wird durch Triangulation bestimmt. Bei dieser Vorgehensweise ist die erreichbare Genauigkeit, mit der die Achsgeometrie bestimmt werden kann, von der Stabilität der Richtungen abhängig, in denen die Beleuchtungslinien auf die Reifenwand projiziert werden. Hierbei in der Praxis auftretende Winkelfehler führen schnell zu Ungenauigkeiten bei der Bestimmung der Achsgeometrie, die nicht tolerabel sind.

Aus der WO 2007/080012 A1 sind ein Verfahren zur optischen Fahrwerksvermessung und eine entsprechende Vorrichtung bekannt, bei denen die Oberflächenstruktur eines Ausschnitts einer Fahrzeugkarosserie und eines Rads mittels eines von einer 2D-Messvorrichtung ausgesandten Laserstrahls flächenhaft oder zumindest längs zwei beliebigen Linien, welche Rad und Karosserie gemeinsam erfassen, abgetastet wird. Aus der abgetasteten Oberflächenstruktur werden als charakteristische Strukturen mindestens zwei Oberflächenprofile gewonnen. Die Vorrichtung umfasst dazu einen Laserscanner, der einen Laserstrahl von einem Laser horizontal und vertikal ablenkt, um Oberflächenpunkte abzutasten. Zur dreidimensionalen Lagebestimmung der Oberflächenpunkte mit diesem Laserscanner wird das Prinzip von räumlichen Polarkoordinaten angewandt, wie es aus dem Vermessungswesen bekannt ist. Die Polarkoordinaten eines Oberflächenpunkts ergeben sich aus zwei Richtungen und der Entfernung zwischen der Vorrichtung und dem Oberflächenpunkt. Zur Erfassung der betrachteten Oberflächenstruktur sendet die Vorrichtung den Laserstrahl aus, der von der Objektoberfläche zu einem Sensor der Vorrichtung zurückreflektiert wird. Die Entfernung zum Oberflächenpunkt ergibt sich aus einer Laufzeitmessung und/oder Phasendifferenzmessung. In der Praxis erweist es sich als sehr aufwändig, mit diesem Messverfahren die für die Vermessung der Achsgeometrie eines Fahrzeugs notwendige Genauigkeit zu erreichen.

### AUFGABE DER ERFINDUNG

Der Erfindung liegt die Aufgabe zugrunde, ein Verfahren und eine Vorrichtung zur stereo-photogrammetrischen Vermessung von unterschiedlichen Objekten aufzuzeigen, die vergleichsweise kostengünstig realisierbar sind und dennoch hohe Anforderungen an die Machbarkeit der Vermessung unter ungünstigen Bedingungen und deren Genauigkeit zum Beispiel bei der bestimmten Achsgeometrie eines Fahrzeugs oder Zuverlässigkeit zum Beispiel bei der Gesichtserkennung oder der Identitätsüberprüfung erfüllen können.

### LÖSUNG

Die Aufgabe der Erfindung wird durch ein Verfahren mit den Merkmalen des Patentanspruchs 1 gelöst. Die abhängigen Patentansprüchen 2 bis 13 sind auf bevorzugte Ausführungsformen des erfindungsgemäßen Verfahrens gerichtet, wobei die Patentansprüche 11 bis 13 eine Anwendung des erfindungsgemäßen Verfahrens zur stereo-photogrammetrischen Bestimmung der Achsgeometrie von unterschiedlichen Fahrzeugen betreffen. Der Patentanspruch 14 betrifft eine erfindungsgemäße Vorrichtung zur Durchführung des erfindungsgemäßen Verfahrens. Der Patentanspruch 15 ist eine bevorzugte Ausführungsform der erfindungsgemäßen Vorrichtung gerichtet.

### BESCHREIBUNG DER ERFINDUNG

Bei dem erfindungsgemäßen Verfahren zur stereo-photogrammetrischen Vermessung von unterschiedlichen Objekten werden nebeneinander angeordnete Beleuchtungslinien auf eine Oberfläche des jeweiligen Objekts projiziert, indem ein zu jedem Zeitpunkt in einem Auftreffpunkt auf die Oberfläche des jeweiligen Objekts auftreffender Laserstrahl definiert in Richtung von zwei Raumwinkeln abgelenkt wird, wobei definierte Bereiche des jeweiligen Objekts, die zwischen den unterschiedlichen Objekten variieren, mit den Auftreffpunkten des Laserstrahls ausgespart werden. Die Oberfläche des jeweiligen Objekts wird aus zwei unterschiedlichen festen und bekannten Abbildungsrichtungen in Bildern abgebildet, wobei eine von den beiden Abbildungsrichtungen aufgespannte Ebene die Oberfläche in einer Schnittlinie schneidet, die längs den Beleuchtungslinien verläuft. Dieses Abbilden der Oberfläche des jeweiligen Objekts wird mit dem Projizieren der Beleuchtungslinien derart synchronisiert, dass Abbilder der Beleuchtungslinien in den Bildern durch während einer Belichtung des jeweiligen Bilds aufeinanderfolgende Auftreffpunkte des Laserstrahls auf die Oberfläche des jeweiligen Objekts ausgebildet werden. Das heißt, jede Beleuchtungslinie entspricht einem Verschwenken des Laserstrahls durch unterschiedlich starkes Ablenken in Richtung der Beleuchtungslinie während der Belichtung des Bildes zum Abbilden der Beleuchtungslinie.

Dass die von den beiden Abbildungsrichtungen aufgespannte Ebene die Oberfläche in einer Schnittlinie schneidet, die längs den Beleuchtungslinien verläuft, bedeutet, dass die Beleuchtungslinien zumindest eine wesentliche Linienkomponente aufweisen, die parallel zu der Schnittlinie verläuft. Es ist aber nicht erforderlich, dass die Beleuchtungslinien selbst auf einer ebenen Oberfläche parallel zu der Schnittlinie verlaufen, auch wenn eine möglichst große parallele Linienkomponente vorteilhaft ist, was die Auswertbarkeit der Bilder in Bezug auf die Kontur und/oder den Verlauf der Oberfläche im Raum anbelangt. Die von den Abbildungsrichtungen aufgespannte Ebene wird die Oberfläche des jeweiligen Objekts in aller Regel tatsächlich schneiden. Dies ist aber nicht zwingend. Die von den Abbildungsrichtungen aufgespannte Ebene kann die Oberfläche einzelner oder aller der unterschiedlichen Objekte auch verfehlen, so dass sich die Schnittlinie nur im Bereich einer gedachten Erweiterung der Oberfläche ausbildet. Dabei ist zu bedenken, dass auch die von den Abbildungsrichtungen aufgespannte Ebene ebenso wie deren Schnittlinie mit der Oberfläche des jeweiligen Objekts nur gedachte, d. h. virtuelle Objekte sind. Die Beleuchtungslinien können ihrerseits etwa parallel zueinander verlaufen, wenn sie auf eine ebene Oberfläche projiziert werden. Eine genaue Parallelität der Beleuchtungslinien ist aber auch in diesem Fall nicht erforderlich.

Bei dem erfindungsgemäßen Verfahren wird von der Tatsache, dass der abgelenkte Laserstrahl grundsätzlich punktförmig auf die Oberfläche des jeweiligen Objekts auftrifft, nur insoweit Gebrauch gemacht, als das hierdurch große Freiheiten in Hinblick auf die Ausbildung der Beleuchtungslinien gegeben sind. In den erfindungsgemäß aufgenommenen Bildern der Oberfläche des jeweiligen Objekts finden sich hingegen in der Regel keine Abbilder einzelner Auftreffpunkte des Laserstrahls auf die Oberfläche des jeweiligen Objekts, sondern nur die jeweils aus einer Vielzahl solcher Auftreffpunkte zusammengesetzten Beleuchtungslinien. Die Auftreffpunkte gehen dabei ineinander über und sind in dem Abbild der jeweiligen Beleuchtungslinie nicht mehr auflösbar. Entsprechend werden bei dem erfindungsgemäßen Verfahren in der Regel keine Abbilder von einzelnen Auftreffpunkten des Laserstrahls auf die Oberfläche des jeweiligen Objekts messtechnisch ausgewertet, sondern, wie grundsätzlich bekannt, ausgezeichnete Punkte der Beleuchtungslinien. Dabei erfolgt die Bestimmung der Lage dieser Punkte der Beleuchtungslinien im Raum stereo-photogrammetrisch unter Ausnutzung der bekannten Abbildungsrichtungen, aus denen die Bilder der Oberfläche des jeweiligen Objekts und damit die Abbilder der Beleuchtungslinien aufgenommen wurden.

Einrichtungen zum definierten horizontalen und vertikalen Ablenken des Laserstrahls, d. h. sogenannte Laserscanner, sind kommerziell zu relativ geringen Kosten in völlig ausreichender Qualität verfügbar. Für eine erfolgreiche Durchführung des erfindungsgemäßen Verfahrens muss die Positioniergenauigkeit des Laserstrahls gegenüber den Abbildungsrichtungen durch sein Ablenken in Richtung der beiden Raumwinkel nicht sehr hoch sein, weil die Genauigkeit bei der stereo-photogrammetrischen Vermessung der Oberfläche des jeweiligen Objekts nicht auf dieser Positioniergenauigkeit beruht. Bereits einfache kommerziell verfügbare Laserscanner können durch digitale Steuersignale so angesteuert werden, dass sie den Laserstrahl zur erfindungsgemäßen Ausbildung einer Vielzahl von nebeneinander angeordneten, längs der von den Abbildungsrichtungen aufgespannten Ebene verlaufenden Beleuchtungslinien ablenken. Die stereophotogrammetrischen Vermessung der Oberfläche des jeweiligen Objekts kann so auf einer großen Datenbasis und mit entsprechend hoher Genauigkeit erfolgen. Dabei ist auch für eine große Anzahl von dicht nebeneinander angeordneten Beleuchtungslinien nur ein einziger Laser zur Bereitstellung eines einzigen Laserstrahls erforderlich. Der Laserscanner ersetzt also eine Vielzahl zusätzlicher Laser. Mit anderen Worten ist der Laserscanner in Verbindung mit dem einen Laser sehr schnell kostengünstiger als eine größere Anzahl von Lasern, auch von Laserdioden, denen jeweils eine Zylinderlinse zum Auffächern ihres Laserstrahls zugeordnet ist. Zudem ist die Anordnung der mit Hilfe des Laserscanners ausgebildeten Beleuchtungslinien sehr variabel. So kann die Anordnung der Beleuchtungslinien durch eine abgestimmte Ablenkung des Laserstrahls an das jeweilige Objekts angepasst werden. Dieses Anpassen umfasst erfindungsgemäß das Aussparen der zwischen den unterschiedlichen Objekten variierenden definierten Bereiche des jeweiligen Objekts mit den Auftreffpunkten des Laserstrahls.

Vorzugsweise umfasst dieses Anpassen auch, dass der Laserstrahl beim Projizieren der Beleuchtungslinien zu jedem Zeitpunkt auf die Oberfläche des jeweiligen Objekts auftrifft, indem er nur entsprechend abgelenkt wird oder unterbrochen wird, um Richtungen auszusparen, in denen der Laserstrahl nicht auf die Oberfläche des jeweiligen Objekts auftrifft. Hiermit wird verhindert, dass sich der Laserstrahl unkontrolliert ausbreitet.

Bei dem erfindungsgemäßen Synchronisieren können die aus den beiden unterschiedlichen Abbildungsrichtungen aufgenommenen Bilder grundsätzlich jeweils alle Beleuchtungslinien aufweisen, die überhaupt auf der Oberfläche des jeweiligen Objekts ausgebildet werden. Dazu ist die Belichtung der Bilder so lang zu wählen, dass der Laserstrahl während jeder Belichtung alle Beleuchtungslinien entlang abgelenkt wird. Die Zuordnung ausgezeichneter Punkte derselben Beleuchtungslinien in den aus den beiden unterschiedlichen Abbildungsrichtungen aufgenommenen Bildern kann jedoch leichter fallen, wenn das Synchronisieren derart erfolgt, dass in jedem Bild nur eine Teilmenge von nicht mehr als der Hälfte der Gesamtzahl der Beleuchtungslinien ausgebildet wird. Hierdurch wird das Zuordnen derselben Punkte auf der Oberfläche des jeweiligen Objekts zu bestimmten Bildpunkten in den zugehörigen Bildern erleichtert. In dieser Ausführungsform ersetzt das erfindungsgemäße Synchronisieren das zu demselben Zweck bekannte Ein- und Ausschalten einzelner Laserdioden, wenn die Beleuchtungslinien nicht erfindungsgemäß, sondern mit einer Vielzahl von Laserdioden projiziert werden.

In einer extremen Ausführungsform des erfindungsgemäßen Verfahrens erfolgt das Synchronisieren derart, dass in jedem Bild nur ein Abbild einer Beleuchtungslinie ausgebildet wird. In dieser Ausführungsform kann der Laserstrahl kontinuierlich auf die Oberfläche des jeweiligen Objekts gerichtet werden, ohne dass in den Bildern zu erkennen ist, wo der Laserstrahl zwischen den einzelnen Beleuchtungslinien versetzt wurde, weil dieses Versetzen außerhalb der Belichtung der einzelnen Bilder erfolgen kann. Wenn jedoch während der Belichtung eines einzelnen Bilds, oder besser gesagt eines Paars von Bildern aus den beiden Abbildungsrichtungen, mehrere übereinander angeordnete Beleuchtungslinien mit dem Laserstrahl ausgebildet werden, muss der Laserstrahl während der Belichtung zwischen den Beleuchtungslinien umgesetzt werden. Dies resultiert in Lichtintensitäten außerhalb der Beleuchtungslinien, die sich in den Bildern wiederfinden. Diese Lichtintensitäten können jedoch durch ein vergleichsweise schnelles Verschwenken oder Ablenken des Laserstrahls zwischen den verschiedenen Beleuchtungslinien so klein gehalten werden, dass sie mit einem Kantenfilter für die Intensität aus den Bildern herausgefiltert werden können.

Alternativ kann der Laserstrahl zwischen dem Ausbilden der einzelnen Beleuchtungslinien durch Abschalten oder Ausblenden unterbrochen werden, so dass der Laserstrahl nur zum Projizieren der gewünschten Beleuchtungslinien auf die Oberfläche des jeweiligen Objekts trifft. Dieses Abschalten oder Ausblenden kann auch dazu genutzt werden, um die zwischen den unterschiedlichen Objekten variierenden definierten Bereiche des jeweiligen Objekts mit den Auftreffpunkten des Laserstrahls auszusparen. Eine Ablenkeinrichtung für den Laserstrahl kann dann unabhängig von dem jeweiligen Objekt immer gleich betrieben werden, um den Laserstrahl in Richtung der beiden Raumwinkel abzulenken. Die Anpassung an das jeweilige Objekt erfolgt dabei möglicherweise nur durch das vorübergehende Abschalten oder Ausblenden des Laserstrahls.

Um die definierten Bereiche festzulegen, die mit den Auftreffpunkten des Laserstrahls ausgespart werden, können die aufgenommenen Bilder oder kann mindestens ein früheres, d. h. früher aufgenommenes Bild, das die Oberfläche des jeweiligen Objekts ohne ausgebildete Beleuchtungslinien abbildet, ausgewertet werden. Dies kann mittels herkömmlicher Bildverarbeitung vollautomatisch erfolgen,

So können die in einer initialen Phase des erfindungsgemäßen Verfahrens aufgenommenen Bilder hinsichtlich einer Lichtintensität der Abbilder der Beleuchtungslinien ausgewertet werden, um festzustellen, wo die Beleuchtungslinien tatsächlich wie gewünscht auf die Oberfläche des jeweiligen Objekts projiziert werden und wo sie sich möglicherweise bis in angrenzende Bereiche des jeweiligen Objekts erstrecken, die mit den Auftreffpunkten des Laserstrahls auszusparen sind, oder wo die Beleuchtungslinien das jeweilige Objekt ganz verfehlen. Abhängig von dem Ergebnis dieser Auswertung kann die Ablenkung und/oder das Aussenden des Laserstrahls auf solche Bereiche eingestellt, d. h. beschränkt oder auch ausgeweitet werden, in denen die Beleuchtungslinien ausgebildet werden sollen. Konkret kann die Ablenkung und/oder das Aussenden des Laserstrahls auf solche Bereiche eingestellt werden, in denen die Lichtintensität der Abbilder der Beleuchtungslinien in einen Wertebereich fällt, der einer diffusen Streuung des Laserstrahls an der Oberfläche des jeweiligen Objekts entspricht. Dort, wo die Lichtintensität ihrer Abbilder größer ist, weil der Laserstrahl beispielsweise von dem jeweiligen Objekt spiegelnd reflektiert wird, ist die Auswertung der aufgenommenen Bilder erschwert, und solche Reflektionen können auch die Beleuchtungslinien in angrenzenden Bereichen überstrahlen, so dass diese Bereiche sinnvollerweise mit den Auftreffpunkten des Laserstrahls ausgespart werden. Hingegen ist die Lichtintensität der Abbilder geringer oder gar null, wenn die Beleuchtungslinien über das jeweilige Objekt hinausgehen. Dies kann durch Auswertung der Abbilder der Beleuchtungslinien automatisch festgestellt und zur Optimierung der Anfangs- und Endpunkte aller Beleuchtungslinien genutzt werden. Beleuchtungslinien, die ausschließlich wie gewünscht auf diffus reflektierende Bereiche der Oberfläche des jeweiligen Objekts projiziert werden, dienen auch der Lasersicherheit, weil der Laserstrahl so im Wesentlichen immer auf die diffus reflektierenden Bereiche trifft und dort teilweise absorbiert bzw. von dort teilweise diffus gestreut wird, aber beispielsweise nicht direkt oder durch spiegelnde Reflektion in die Augen einer in der Nähe des jeweiligen Objekts befindliche Person.

Bei dem erfindungsgemäßen Verfahren kann die Oberfläche des jeweiligen Objekts auch in Bildern aus drei unterschiedlichen Abbildungsrichtungen abgebildet werden. Wenn diese drei Abbildungsrichtungen geeignet angeordnet werden, indem die dritte Abbildungsrichtung zum Beispiel geneigt zu der Ebene verläuft, die von den beiden weiteren Abbildungsrichtungen aufgespannt wird, können die Beleuchtungslinien, die auf die Oberfläche des jeweiligen Objekts projiziert werden, nahezu jeden beliebigen Verlauf aufweisen, weil jeder Abschnitt dieses Verlaufs eine ausreichend große Linienkomponente aufweist, die parallel zu einer der drei Ebenen verläuft, die jeweils von einem Paar der drei Abbildungsrichtungen aufgespannt werden.

Wenn bei dem erfindungsgemäßen Verfahren von jedem Bild, das ein Abbild einer Beleuchtungslinie umfasst, ein Referenzbild desselben Objekts abgezogen wird, das kein Abbild einer Beleuchtungslinie umfasst, finden sich in dem Bild ausschließlich Lichtintensitäten von der Beleuchtungslinie. Auf diese Weise kann die Beleuchtungslinie besonders einfach analysiert werden.

In einem dem eigentlichen Betrieb des erfindungsgemäßen Verfahrens vorhergehenden Anlernmodus können die Beleuchtungslinien auf eine definiert zu den Abbildungsrichtungen ausgerichtete Referenzoberfläche projiziert werden, und der Laserstrahl kann dann derart abgelenkt werden, dass die in den aufgenommenen Bildern durch die aufeinanderfolgenden Auftreffpunkte des Laserstrahls auf die Referenzoberfläche ausgebildeten Abbilder der Beleuchtungslinien ein vorgegebenes Muster aufweisen. Das heißt, das Ablenken des Laserstrahls wird so angepasst, dass eben dieses Muster erhalten wird. Diese Anpassung kann automatisch erfolgen oder auch durch menschlichen Eingriff. Beides kann dadurch unterstützt werden, dass in die Referenzoberfläche das vorgegebene Muster aufweist. Dann ist die Ablenkung des Laserstrahls so lange anzupassen, bis er das Muster auf der Referenzoberfläche nachzeichnet. Auf diese Weise können die Beleuchtungslinien eine Grundausrichtung erfahren, die dann im Betrieb des erfindungsgemäßen Verfahrens noch an die unterschiedlichen Objekte angepasst werden kann. Das heißt, dass zum Erreichen des vorgegebenen Musters angepasste Ablenken des Laserstrahls wird beim anschließenden Projizieren der Beleuchtungslinien auf die Oberfläche des jeweiligen Objekts berücksichtigt. Der Anlernmodus des erfindungsgemäßen Verfahrens ersetzt die gesamte Montage von Blöcken von Laserlichtquellen und deren räumliche Relativanordnung, wie sie nach dem Stand der Technik erforderlich sind.

Bei dem erfindungsgemäßen Verfahren kann ein Verlauf oder eine Kontur der Oberfläche des jeweiligen Objekts anhand von stereo-photogrammetrisch bestimmten Raumlagen von ausgezeichneten Punkten einer Mehrzahl der Beleuchtungslinien auf der Oberfläche bestimmt werden. Die jeweiligen Punkte können sich dadurch auszeichnen, dass die Beleuchtungslinie an ihnen eine Richtungsänderung erfährt, die auf eine Oberflächenstruktur der jeweiligen Oberfläche, wie beispielsweise einen Vorsprung, eine Vertiefung oder eine Kante, zurückgeht.

Der derart bestimmte Verlauf oder die derart bestimmte Kontur kann mit einem Vergleichsverlauf oder einer Vergleichskontur verglichen werden. Wenn Abweichungen zwischen dem Verlauf und dem Vergleichsverlauf oder der Kontur und der Vergleichskontur einen vorgegebenen Grenzwert einhalten, dann kann eine Identität des jeweiligen Objekts mit einem durch den Vergleichsverlauf oder die Vergleichskontur definierten Vergleichsobjekt angezeigt werden bzw. im gegenteiligen Fall auf eine fehlende Identität hingewiesen werden.

Konkret kann das erfindungsgemäße Verfahren die Kontur eines Gesicht einer Person und damit die Identität der Person bestimmen. Die bestimmte Kontur kann als biometrische Daten zu der Person gespeichert werden. Später kann die Kontur des Gesichts der Person mit dem erfindungsgemäße Verfahren erneut bestimmt und mit den gespeicherten biometrischen Daten verglichen werden, um zu prüfen, ob sich tatsächlich um dieselbe Person handelt. Dabei können erfindungsgemäß beispielsweise die Augen der Person oder auch irgendwelche stark reflektierenden Objekt wie Schmuck oder Brillengläser im Gesicht der Person mit den Auftreffpunkten des Laserstrahls automatisch ausgespart werden. Die entsprechenden Bereiche des Gesichts können aus einem ohne projizierte Beleuchtungslinien aufgenommenen Bild des Gesichts durch einfache Bildverarbeitung ermittelt werden.

Eine andere Anwendung des erfindungsgemäßen Verfahrens besteht in der stereo-photogrammetrischen Bestimmung der Achsgeometrie von unterschiedlichen Fahrzeugen. Bei dieser Anwendung ist die Oberfläche des jeweiligen Objekts eine Reifenwand eines Rads des jeweiligen Fahrzeugs, und die Beleuchtungslinien liegen so in Bereichen, die in Längsrichtung des Fahrzeugs vor und hinter einer Radachse des Rads liegen, auf die Reifenwand projiziert werden, dass die Beleuchtungslinien horizontal verlaufen. Konkret wird die Lage einer Radebene des Rads relativ zu den Abbildungsrichtungen anhand der stereo-photogrammetrisch bestimmten Lagen von ausgezeichneten Punkten einer Mehrzahl der Beleuchtungslinien auf der Reifenwand bestimmt.

In der initialen Phase dieser Anwendung des erfindungsgemäßen Verfahrens können die aufgenommenen Bilder alternativ oder zusätzlich auch ausgewertet werden, um aus den Abbildern der Beleuchtungslinien einen Felgendurchmesser und/oder einen Raddurchmesser des jeweiligen Rads zu bestimmen. Die definierten Bereiche des jeweiligen Rads, die mit den Auftreffpunkten des Laserstrahls ausgespart werden, und/oder eine Anordnung der Beleuchtungslinien können/kann dann abhängig vom dem Ergebnis dieser Bestimmungen festgelegt werden.

Insbesondere kann die Anordnung der Beleuchtungslinien in vertikaler Richtung abhängig von dem Raddurchmesser festgelegt werden. Hierzu zählt es nicht nur, dass die Anordnung der Beleuchtungslinien mit der vertikalen Lage der Radachse verschoben wird, sondern auch, dass der von den Beleuchtungslinien in vertikaler Richtung überspannte Bereich an den Raddurchmesser des Rads, d. h. die Radgröße angepasst werden kann und damit auch ein vertikaler Abstand und/oder eine Gesamtanzahl der Beleuchtungslinien. Auf die Reifenwand größerer Räder werden die Beleuchtungslinien vorzugsweise über einen größeren Bereich in vertikaler Richtung verteilt projiziert als bei kleineren Rädern, um die Radgröße für die Bestimmung der Achsgeometrie maximal auszunutzen.

Bei der Anwendung des erfindungsgemäßen Verfahrens zur Bestimmung der Achsgeometrie von unterschiedlichen Fahrzeugen kann der Laserstrahl einmalig oder wiederholt derart abgelenkt werden, dass zusätzliche vertikale Beleuchtungslinien auf eine Kotflügelkante über der Radachse des jeweiligen Rads projiziert werden. Dieses Projizieren kann derart mit den Belichtungen der Bilder synchronisiert werden, dass Abbilder der zusätzlichen Beleuchtungslinien in den Bildern durch während der Belichtung des jeweiligen Bilds aufeinander folgende Auftreffpunkte des Laserstrahls auf die Kotflügelkante oder anderer im Sichtfeld einer oder beider Kameras befindlichen Fahrzeugteile ausgebildet werden. Aus diesen Bildern kann stereo-photogrammetrisch zusätzlich die Höhenlage der Karosserie des Fahrzeugs bestimmt werden. Um die vertikalen Beleuchtungslinien sicher auswerten zu können, sind sie jedoch zusätzlich aus einer weiteren Abbildungsrichtung abzubilden, die geneigt zu der Ebene verläuft, die von den beiden weiteren Abbildungsrichtungen aufgespannt wird.

Konkret kann bei der Anwendung des erfindungsgemäßen Verfahrens zur Bestimmung der Achsgeometrie von unterschiedlichen Fahrzeugen die Lage einer Radebene des jeweiligen Rads relativ zu den Abbildungsrichtungen anhand der stereo-photogrammetrisch bestimmten Lagen von ausgezeichneten Punkten einer Mehrzahl der Beleuchtungslinien auf der Reifenwand bestimmt werden.

Grundsätzlich kann die konkrete stereo-photogrammetrische Bestimmung der Achsgeometrie bei dem erfindungsgemäßen Verfahren nach bekannten Techniken erfolgen. Nach den wesentlichen Merkmalen der vorliegenden Erfindung werden hierfür besonders geeignete Bilder der Reifenwand mit den darauf projizierten Beleuchtungslinien bereitgestellt.

Bei einer erfindungsgemäßen Vorrichtung zur Vermessung von unterschiedlichen Objekten mit einer Lichtquelle zum Projizieren von nebeneinander angeordneten Beleuchtungslinien auf eine Oberfläche des jeweiligen Objekts, weist die Lichtquelle einen einen Laserstrahl emittierenden Laser und einen Laserscanner auf, der den zu jedem Zeitpunkt in einem Auftreffpunkt auf die Oberfläche auftreffenden Laserstrahl definiert in Richtung von zwei Raumwinkeln ablenkt. Die Vorrichtung umfasst weiterhin zwei die Reifenwand in Bildern aus unterschiedlichen Abbildungsrichtungen abbildende Kameras und eine die Lichtquelle mit den Kameras synchronisierende Steuerung. Diese Steuerung steuert den Laserscanner an und ist zur Ausführung des erfindungsgemäßen Verfahrens ausgebildet. Das heißt, sie synchronisiert den Laserscanner derart mit den Kameras, dass Abbilder der Beleuchtungslinien in den Bildern durch während einer Belichtung des jeweiligen Bilds aufeinander folgende Auftreffpunkte des Laserstrahls auf die Reifenwand ausgebildet werden, wobei die definierte Bereiche des jeweiligen Objekts, die zwischen den unterschiedlichen Objekten variieren, mit den Auftreffpunkten des Laserstrahls ausgespart werden. Weitere Details der Steuerung der erfindungsgemäßen Vorrichtung sind aus den Details des erfindungsgemäßen Verfahrens ableitbar. Die Steuerung setzt das erfindungsgemäße Verfahren vorzugsweise vollautomatisch um.

Die Lichtquelle und der Laserscanner der erfindungsgemäßen Vorrichtung können Teile einer Wechseleinheit sein, die lösbar an einer eine tragende Struktur und die Kameras umfassenden Haupteinheit befestigt ist. Die Wechseleinheit, die ein eigenes geschlossenes Gehäuse umfassen kann, kann so im Fall eines Fehlers der Lichtquelle und/oder des Laserscanners leicht von der Haupteinheit getrennt und gegen eine andere Wechseleinheit ausgetauscht oder repariert und erneut befestigt werden. Es versteht sich, dass die lösbare Verbindung zwischen der Wechseleinheit und der Haupteinheit vorzugsweise Ausrichtflächen und/oder -elemente zur definierten wechselseitigen Ausrichtung umfasst..

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch andere Merkmale ergänzt werden oder die einzigen Merkmale sein, die das jeweilige Verfahren oder die jeweilige Vorrichtung aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch eine erfindungsgemäße Vorrichtung bei der Durchführung des erfindungsgemäßen Verfahrens an einem Rad eines Fahrzeugs in einer Seitenansicht mit Blickrichtung quer zur Radachse des Rads.
- **Fig. 2**: ist eine Ansicht des Rads gemäß Fig. 1 mit Blickrichtung längs der Radachse des Rads von der Vorrichtung aus.
- **Fig. 3**: ist eine Ansicht eines anderen Rads während eines ersten Schritts des erfindungsgemäßen Verfahrens mit derselben Blickrichtung wie in Fig. 2.
- **Fig. 4**: zeigt das Rad gemäß Fig. 3 in einem späteren Schritt des erfindungsgemäßen Verfahrens mit derselben Blickrichtung wie in Fig. 3.
- **Fig. 5**: ist ein Blockdiagramm einer Ausführungsform des erfindungsgemäßen Verfahrens zur Bestimmung einer Achsgeometrie von verschiedenen Fahrzeugen; und
- **Fig. 6**: ist ein Blockdiagramm einer allgemeinen Ausführungsform des erfindungsgemäßen Verfahrens zur Vermessung von unterschiedlichen Objekten.

### FIGURENBESCHREIBUNG

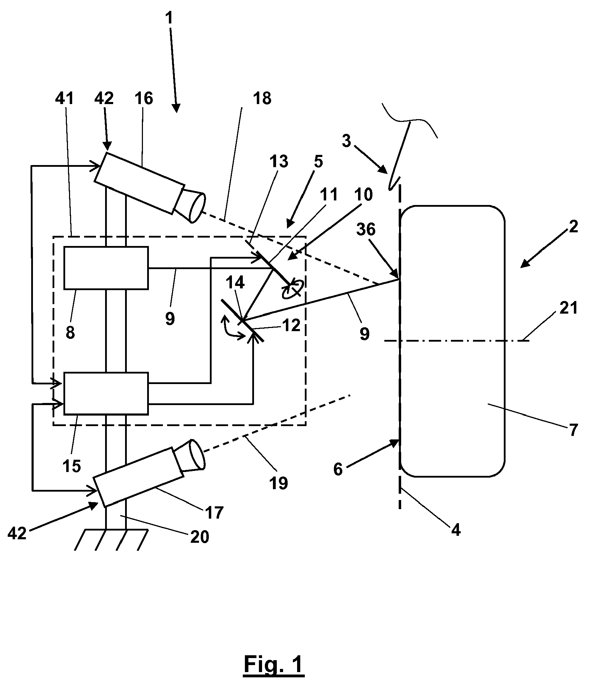

Die in **Fig. 1** dargestellte Vorrichtung 1 dient zur Vermessung von unterschiedlichen Objekten, hier konkret zur Bestimmung einer Achsgeometrie von verschiedenen Fahrzeugen. In Fig. 1 sind nur ein Rad 2 und eine darüber liegende Kotflügelkante 3 eines solchen Fahrzeugs gezeigt. Zur vollständigen Bestimmung der Achsgeometrie des zugehörigen Fahrzeugs ist jedem Rad 2 des Fahrzeugs eine Vorrichtung 1 zuzuordnen, wobei die Vorrichtungen 1 in fester räumlicher Beziehung zueinander stehen. Die Vorrichtung 1 dient insbesondere dazu, die Lage einer Radebene 4 des Rads 2 im Raum zu bestimmen. Zusätzlich dient die Vorrichtung 1 dazu, eine Höhe der Karosserie des Fahrzeugs anhand der Lage der Kotflügelkante 3 zu bestimmen.

Die Vorrichtung 1 umfasst eine Lichtquelle 5 zum Projizieren von Beleuchtungslinien auf eine der Vorrichtung 1 zugekehrte Reifenwand 6 eines Reifens 7 des Rads 2. Die Lichtquelle 5 weist einen Laser 8 auf, der einen Laserstrahl 9 emittiert und einen Laserscanner 10, der den Laserstrahl 9 definiert in horizontaler und vertikaler Richtung ablenkt. Der Laserscanner 10 umfasst hier zwei den Laserstrahl 9 reflektierende Spiegel 11 und 12, wobei der Spiegel 11 um eine in der Zeichenebene verlaufende Schwenkachse 13 verschwenkbar ist, um den Laserstrahl 9 in horizontaler Richtung zu verschwenken, während der Spiegel 12 um eine normal zu der Zeichenebene verlaufende Achse 14 verschwenkbar ist, um den Laserstrahl 9 in vertikaler Richtung zu verschwenken. Der Laserscanner 10 kann auch nur einen einzigen Spiegel aufweisen, der um in zwei linear unabhängigen Richtungen verlaufende Schwenkachsen verschwenkbar ist, oder auch mehr als zwei verschwenkbare Spiegel. Ebenso ist die Anordnung des Lasers relativ zu den Spiegeln 11, 12 und die Anordnung der Spiegel 11, 12 zueinander nicht auf die dargestellte Ausführungsform des Laserscanners 10 beschränkt. Das Verschwenken der Spiegel 11, 12 erfolgt mit in Fig. 1 nicht dargestellten Schwenkantrieben für die Spiegel 11 und 12, die von einer Steuerung 15 angesteuert werden, um einen Auftreffpunkt 36 des Laserstrahls 9 auf die Reifenwand 6 in definierter Weise zu verschieben. Damit werden auf der Reifenwand 6 Beleuchtungslinien ausgebildet, von denen Abbilder in Bildern von zwei Kameras 16 und 17 der Vorrichtung 1 zu finden sind, die die Reifenwand 6 aus zwei verschiedenen Abbildungsrichtungen 18 und 19 abbilden. Eine von den Abbildungsrichtungen 18 und 19 aufgespannten Ebene weist eine etwa horizontal verlaufende virtuelle Schnittlinie mit der Reifenwand 6 auf. Aus den Abbildern der Beleuchtungslinien ist die Radebene 4 und damit die interessierende Achsgeometrie des Fahrzeugs stereo-photogrammetrisch bestimmbar. Dabei basiert die erreichte Ortsauflösung auf einer festen Zuordnung der Abbildungsrichtungen 18 und 19 zueinander und zu einer tragenden Struktur 20 und auf der Analyse einer möglichst großen Anzahl von Beleuchtungslinien, nicht aber auf der genauen Einhaltung bestimmter Lagen des Auftreffpunkts 16 des Laserstrahls 9 auf die Reifenwand 6 beim Verschwenken des Laserstrahls 9 mit dem Laserscanner 10. Weiterhin ist in Fig. 1 angedeutet, dass die Lichtquelle 5 und der Laserscanner 10 Teile einer Wechseleinheit 41 sind, die lösbar an einer eine tragende Struktur 20 und die Kameras 16, 17 umfassenden Haupteinheit 42 befestigt ist.

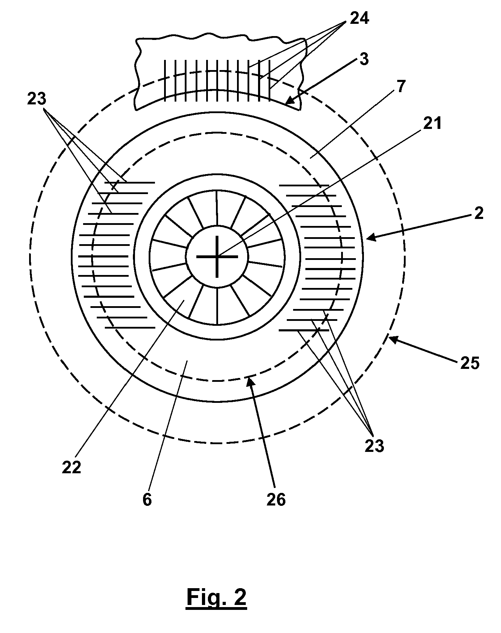

**Fig. 2** zeigt das Rad 2 in einer Seitenansicht mit Blickrichtung längs seiner Radachse 21 von der Vorrichtung 1 gemäß Fig. 1 her. Der Reifen 7 des Rads 2 ist auf einer Felge 22 montiert. Oberhalb des Rads 2 verläuft die Kotflügelkante 3. Auf der Reifenwand 6 des Reifens 7 des Rads 2 sind Beleuchtungslinien 23 dargestellt, die eine günstige Anordnung für die Bestimmung der Radebene 4 gemäß Fig. 1 aufweisen. Die Beleuchtungslinien 23 verlaufen jeweils horizontal und damit zumindest im Wesentlichen parallel zu der Schnittlinie zwischen der von den Abbildungsrichtungen 18 und 19 aufgespannten Ebene und der Reifenwand 6 sowie ausschließlich über die Reifenwand 6, das heißt weder bis in den Bereich der Durchbrechungen aufweisenden Felge 22 noch über den Außenumfang des Rads 2 hinaus, und sie sind in einer ersten Vielzahl vor und in einer zweiten Vielzahl hinter der Radachse 21 übereinander angeordnet. Konkret verlaufen die Beleuchtungslinien 23 etwa horizontal und in etwa gleichen vertikalen Abständen zueinander. Weitere Beleuchtungslinien 24 verlaufen etwa vertikal und in etwa gleichen horizontalen Abständen über die Kotflügelunterkante 3 oberhalb der Radachse 21. Um in Bezug auf die Lage der Kotflügelunterkante 3 aussagekräftige Abbilder der weiteren Beleuchtungslinien 24 in den Bildern der Kameras 16, 17 zu erhalten, sind diese auch mit mindestens einer weiteren, In Fig. 1 nicht gezeigten Kamera in einer weiteren Abbildungsrichtung aufzunehmen, die geneigt zu der von den Abbildungsrichtungen 18 und 19 aufgespannten Ebene verläuft. Auf diese Weise spannt die weitere Abbildungsrichtung mit einer oder beiden der Abbildungsrichtungen 18 und 19 eine weitere Ebene auf, zu der die weiteren Beleuchtungslinien 24 eine wesentliche parallele Linienkomponente aufweisen. Die Ausbildung der Beleuchtungslinien 23 und 24 mit Hilfe des Laserstrahls 9 schließt das Synchronisieren der Kameras 16, 17 mit dem Laserscanner 10 ein. Das Synchronisieren erfolgt derart, dass sich der Auftreffpunkt 36 des Laserstrahls 9 auf die Reifenwand 6 während der Belichtungszeit der Bilder der Kameras 16, 17 jeweils die Beleuchtungslinien 23, 24 entlang bewegt, die in den jeweiligen Bildern zu sehen sein sollen. So können in jedem Bild jeder der Kameras 16, 17 alle Beleuchtungslinien 23 und 24 gemäß Fig. 2 zu sehen sein, wenn der Auftreffpunkt 36 des Laserstrahls 9 auf die Reifenwand 6 diese Beleuchtungslinien 23, 24 sämtlich abfährt. Im anderen Extremfall zeigt jedes der Bilder nur eine dieser Beleuchtungslinien weil der Auftreffpunkt 36 des Laserstahls 9 auf die Reifenwand während der Belichtungszeit jedes Bilds nur eine der Beleuchtungslinien 23 oder 24 abfährt. Eine reduzierte Anzahl der Beleuchtungslinien 23, 24 in den einzelnen Bildern der Kameras 16 und 17 kann die identische Zuordnung der Beleuchtungslinien auf der Reifenwand zu ihren Abbildern in den Bildern der Kameras 16 und 17 erleichtern.

Mit Hilfe der Ansteuerung des Laserscanners 10 durch die Steuerung 15 können die Beleuchtungslinien 23 und 24 in einer solchen Anordnung von der Vorrichtung 1 projiziert werden, die auf das jeweilige Rad 2 und die Lage der Kotflügelkante 3 ideal abgestimmt ist. Die Variabilität der Ausrichtung des Auftreffpunkts 36 des Laserstrahls 9 auf die Reifenwand 6 mit bei der Ansteuerung des Laserscanners 10 erlaubt auch eine schnelle Anpassung an unterschiedliche Radgrößen und Felgendurchmesser. In Fig. 2 sind eine weitere Radgröße 25 und ein weiterer Felgendurchmesser 26 durch gestrichelte Linien angedeutet, die offensichtlich eine andere Anordnung der Beleuchtungslinien 23 für eine optimale Erfassung der Lage der Radebene 4 erfordern.

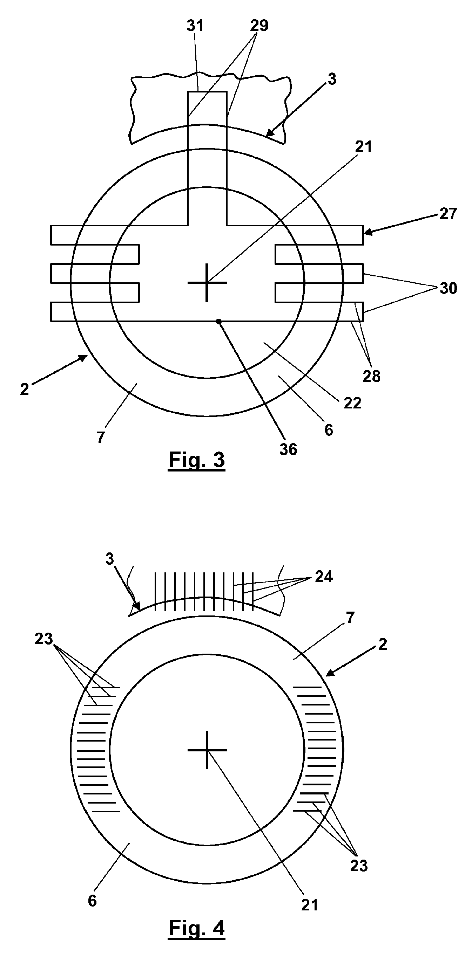

**Fig. 3** zeigt eine Bahn 27, längs der der Auftreffpunkt 36 des Laserstrahls anfänglich über das Rad 2 und die Kotflügelkante 3 verschenkt werden kann, um aus den Bildern der Kameras 16, 17 die Radgröße des Rads 2, den Felgendurchmesser der Felge 22 und die ungefähre Höhe der Kotflügelkante 3 zu erfassen. Davon abhängig kann dann eine ideale Anordnung der Beleuchtungslinien 23 und 24 festgelegt werden, wie sie in **Fig. 4** für das selbe Rad 2 skizziert ist.

Die Bewegungsbahn 27 weist nicht nur horizontale Abschnitte 28 auf, die parallel zu den Beleuchtungslinien 23 verlaufen, und vertikale Abschnitte 29, die parallel zu den Beleuchtungslinien 24 verlaufen, sondern auch dazwischen liegende vertikale und horizontale Abschnitte 30 und 31. Diese Abschnitte 30 und 31 finden sich grundsätzlich auch zwischen den Beleuchtungslinien 23 und 24, wenn keine Maßnahmen zu ihrer Unterdrückung durchgeführt werden. Die hierzu möglichen Maßnahmen umfassen ein zwischenzeitliches Abschalten des Lasers 8 oder Ausblenden des Laserstrahls 9, eine Beschleunigung des Auftreffpunkts 36 längs dieser Abschnitte 30 und 31, so dass sich diese nur mit einer geringeren Lichtintensität in den Bildern der Kameras 16 und 17 finden, und ein derartiges Synchronisieren der Kameras 16 und 17 mit dem Laserscanner 10, dass sich der Auftreffpunkt 36 außerhalb der Belichtungszeiten der Bilder der Kameras die Abschnitte 30 und 31 entlang oder auch sonst zwischen den Beleuchtungslinien 23 und 24 bewegt.

Weiterhin kann in einem Anlernschritt die Bahn 27 statt auf ein Rad 2 auf eine Referenzoberfläche projiziert werden, die sich z. B. längs einer typischen Radebene 7 erstreckt. Dann kann die Steuerung 15 bezüglich ihrer Ansteuerung des Laserscanners 10 so justiert werden, dass sie die Abschnitte 28 bis 31 jeweils möglichst horizontal beziehungsweise vertikal und in definierten Abständen ausrichtet. Dies kann in den Bildern der Kamera 16 und 17 durch Vergleich mit Referenzbildern geprüft werden oder mit dem Auge, indem der gewünschte Verlauf der Bahn 27 auf der Referenzoberfläche markiert ist.

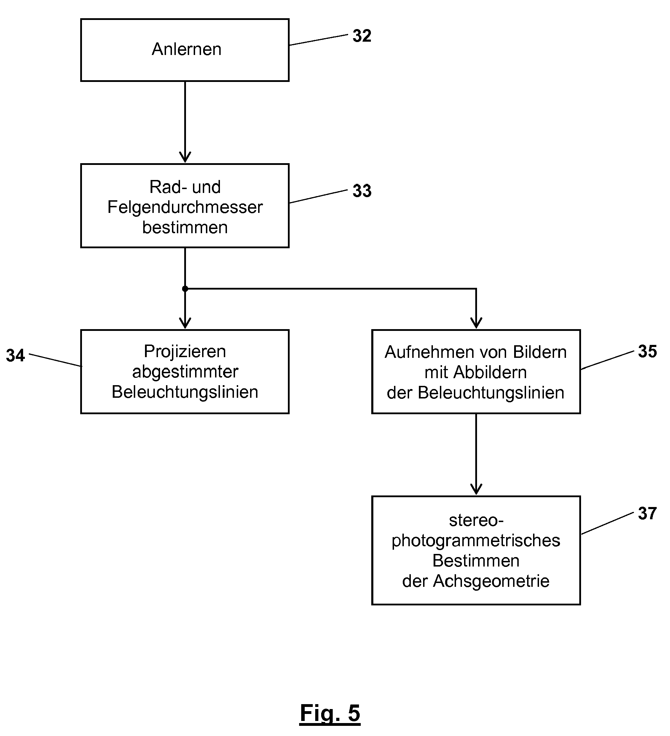

Das Blockdiagramm gemäß Fig. 5 beginnt mit einem solchen Anlernen als erstem Schritt 32. Dann erfolgt in einem Schritt 33 das Bestimmen des Rad- und Felgendurchmesser, wie es anhand von Fig. 3 erläutert wurde. Anschließend werden in einem Schritt 34 auf den Rad- und Felgendurchmesser abgestimmte Beleuchtungslinien auf die Reifenwand 6 projiziert. Dabei werden gleichzeitig und mit dem Projizieren der Beleuchtungslinien im Schritt 34 synchronisiert in einem Schritt 35 Bilder mit Abbildern der Beleuchtungslinien 23, 24 mit den Kameras 16, 17 gemäß Fig. 1 aufgenommen. In einem nachfolgenden Schritt 37 werden diese Bilder ausgewertet, um die Achsgeometrie des jeweiligen Fahrzeugs stereo-photogrammetrisch zu bestimmen. Dabei geht dem Auswerten der Bilder vorzugsweise das Subtrahieren von Bildern desselben Rads aufgenommen mit derselben Kamera, aber ohne Projektion von Beleuchtungslinien voraus, so dass die Bilder, die ausgewertet werden, im Prinzip nur die Beleuchtungslinien 23, 24 selbst zeigen.

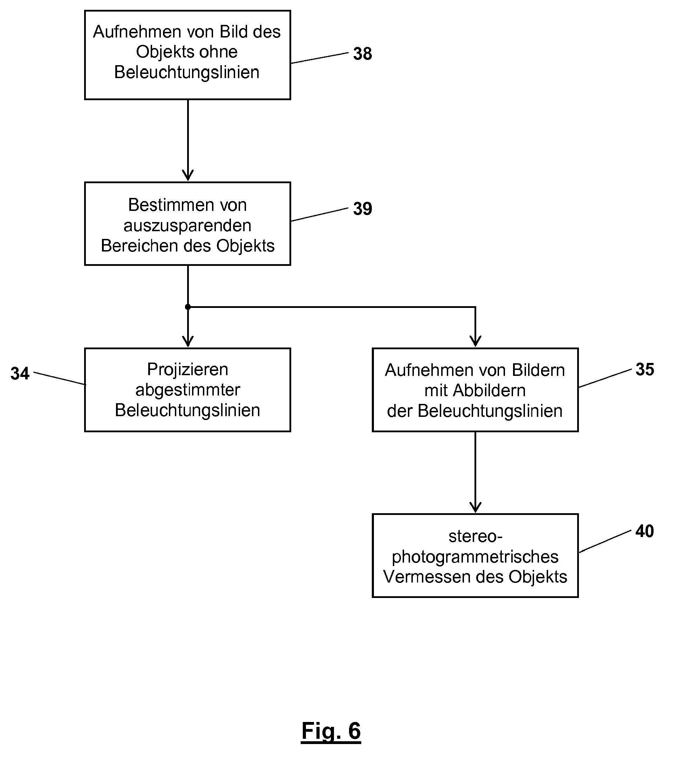

Das Blockdiagramm gemäß **Fig. 6** einer allgemeinen Ausführungsform des erfindungsgemäßen Verfahrens zur Vermessung von unterschiedlichen Objekten beginnt mit einem Aufnehmen mindestens eines Bilds ohne Beleuchtungslinien in einem erstem Schritt 38. Dann erfolgt in einem Schritt 39 ein Bestimmen von mit dem Auftreffpunkt 36 des Laserstrahls 9 auszusparenden Bereichen des Objekts als Teil eines Bestimmens der Bereiche einer Oberfläche des Objekts auf die der Laserstrahl 9 zur Ausbildung der Beleuchtungslinien zu richten ist.. Anschließend werden in dem Schritt 34 die auf das jeweilige Objekt abgestimmten Beleuchtungslinien auf dessen Oberfläche projiziert. Dabei werden gleichzeitig und mit dem Projizieren der Beleuchtungslinien im Schritt 34 synchronisiert in dem Schritt 35 Bilder mit Abbildern der Beleuchtungslinien aus unterschiedlichen Abbildungsrichtungen aufgenommen. In einem nachfolgenden Schritt 40 werden diese Bilder ausgewertet, um die Kontur oder den Verlauf der Oberfläche des Objekts im Raum stereo-photogrammetrisch vermessen. Auch dabei geht dem Auswerten der Bilder vorzugsweise das Subtrahieren von Bildern desselben Objekts voraus, die jeweils unter denselben Umgebungslichtbedingungen mit derselben Kamera, aber ohne Projektion von Beleuchtungslinien aufgenommen wurden, so dass die Bilder, die ausgewertet werden, im Prinzip nur die Beleuchtungslinien selbst zeigen.

### BEZUGSZEICHENLISTE

- 1: Vorrichtung
- 2: Rad
- 3: Kotflügelkante
- 4: Radebene
- 5: Lichtquelle
- 6: Reifenwand
- 7: Reifen
- 8: Laser
- 9: Laserstrahl
- 10: Laserscanner
- 11: Spiegel
- 12: Spiegel
- 13, 14: Schwenkachse
- 15: Steuerung
- 16, 17: Kamera
- 18, 19: Abbildungsrichtung
- 20: Struktur
- 21: Radachse
- 22: Felge
- 23,24: Beleuchtungslinie
- 25: Raddurchmesser
- 26: Felgendurchmesser
- 27: Bahn- oder Bewegungsbahn
- 28 - 31: Abschnitt
- 32 - 35: Schritt
- 36: Auftreffpunkt
- 37 - 40: Schritt
- 41: Wechseleinheit
- 42: Haupteinheit

## Patentansprüche

1. Verfahren zur stereo-photogrammetrischen Vermessung von unterschiedlichen Objekten mit
- Projizieren von nebeneinander verlaufenden Beleuchtungslinien (23) auf eine Oberfläche des jeweiligen Objekts,
- Abbilden der Oberfläche des jeweiligen Objekts in Bildern aus zwei unterschiedlichen Abbildungsrichtungen (18, 19), wobei eine von den beiden Abbildungsrichtungen aufgespannte Ebene die Oberfläche in einer Schnittlinie schneidet, die längs den Beleuchtungslinien verläuft, und
- Synchronisieren des Projizierens der Beleuchtungslinien (23) mit dem Abbilden der Oberfläche des jeweiligen Objekts,
**dadurch gekennzeichnet,**
- **dass** zum Projizieren der Beleuchtungslinien (23) ein zu jedem Zeitpunkt in einem Auftreffpunkt (36) auf die Oberfläche des jeweiligen Objekts auftreffender Laserstrahl (9) definiert in Richtung von zwei Raumwinkeln ablenkt wird, wobei definierte Bereiche des jeweiligen Objekts, die zwischen den unterschiedlichen Objekten variieren, mit den Auftreffpunkten (36) des Laserstrahls (9) ausgespart werden, und
- **dass** das Synchronisieren derart erfolgt, dass Abbilder der Beleuchtungslinien (23) in den Bildern durch während einer Belichtung des jeweiligen Bilds aufeinanderfolgende Auftreffpunkte (36) des Laserstrahls (9) auf die Oberfläche des jeweiligen Objekts ausgebildet werden.

2. Verfahren nach Anspruch 1, **dadurch gekennzeichnet, dass** der Laserstrahl (9) beim Projizieren der Beleuchtungslinien (23) so abgelenkt wird, dass er zu jedem Zeitpunkt auf die Oberfläche des jeweiligen Objekts auftrifft.

3. Verfahren nach Anspruch 1 oder 2, **dadurch gekennzeichnet, dass** das Synchronisieren derart erfolgt, dass
- in jedem Bild eine Teilmenge von nicht mehr als der Hälfte der insgesamt ausgebildeten Abbilder der Beleuchtungslinien (23) ausgebildet wird oder
- in jedem Bild nur ein Abbild einer Beleuchtungslinie (23) ausgebildet wird.

4. Verfahren nach einem der vorhergehenden Ansprüche, **dadurch gekennzeichnet, dass** der Laserstrahl (9) beim Aussparen der definierten Bereiche des jeweiligen Objekts mit seinen Auftreffpunkten (36) und/oder zwischen dem Ausbilden der einzelnen Beleuchtungslinien (23) durch Abschalten oder Ausblenden unterbrochen wird.

5. Verfahren nach einem der vorhergehenden Ansprüche, **dadurch gekennzeichnet, dass** die Bilder oder mindestens ein früheres Bild, das die Oberfläche des jeweiligen Objekts ohne ausgebildete Beleuchtungslinien (23) abbildet, ausgewertet werden/wird, um die definierten Bereiche festzulegen, die mit den Auftreffpunkten (36) des Laserstrahls (9) ausgespart werden, wobei die Bilder, optional, hinsichtlich einer Lichtintensität der Abbilder der Beleuchtungslinien (23) ausgewertet werden und dass die Ablenkung des Laserstrahls (9) auf solche Bereiche einstellt wird, in denen die Lichtintensität der Abbilder der Beleuchtungslinien (23) in einen Wertebereich fällt, der einer diffusen Streuung des Laserstrahls (9) an der Oberfläche des jeweiligen Objekts entspricht.

6. Verfahren nach einem der vorhergehenden Ansprüche, **dadurch gekennzeichnet, dass** die Oberfläche des jeweiligen Objekts in Bildern aus drei unterschiedlichen Abbildungsrichtungen (18, 19) abgebildet wird.

7. Verfahren nach einem der vorhergehenden Ansprüche, **dadurch gekennzeichnet, dass** von jedem Bild, das ein Abbild einer Beleuchtungslinie (23, 24) umfasst, ein Referenzbild desselben Objekts abgezogen wird, das kein Abbild einer Beleuchtungslinie (23, 24) umfasst.

8. Verfahren nach einem der vorhergehenden Ansprüche, **dadurch gekennzeichnet, dass** in einem Anlernmodus die Beleuchtungslinien (23) auf eine definiert zu den Abbildungsrichtungen ausgerichtete Referenzoberfläche projiziert werden und der Laserstrahl (9) derart abgelenkt wird, dass die in den Bildern durch die aufeinanderfolgenden Auftreffpunkte (16) des Laserstrahls (9) auf die Referenzoberfläche ausgebildeten Abbilder der Beleuchtungslinien (23) ein vorgegebenes Muster aufweisen, und dass das zum Erreichen dieses vorgegebenen Musters erforderliche Ablenken des Laserstrahl (9) beim anschließenden Projizierens der Beleuchtungslinien (23) auf die Oberfläche des jeweiligen Objekts berücksichtigt wird.

9. Verfahren nach einem der vorhergehenden Ansprüche, **dadurch gekennzeichnet, dass** ein Verlauf oder eine Kontur der Oberfläche des jeweiligen Objekts anhand von stereo-photogrammetrisch bestimmten Raumlagen von ausgezeichneten Punkten einer Mehrzahl der Beleuchtungslinien (23) auf der Oberfläche bestimmt wird.

10. Verfahren nach Anspruch 9, **dadurch gekennzeichnet, dass** der Verlauf oder die Kontur mit einem Vergleichsverlauf oder einer Vergleichskontur verglichen wird und dass dann, wenn Abweichungen zwischen dem Verlauf und dem Vergleichsverlauf oder der Kontur und der Vergleichskontur einen vorgegebenen Grenzwert einhalten, eine Identität des jeweiligen Objekts mit einem durch den Vergleichsverlauf oder die Vergleichskontur definierten Vergleichsobjekt angezeigt wird.

11. Anwendung des Verfahrens nach einem der vorhergehenden Ansprüche zur stereo-photogrammetrischen Bestimmung der Achsgeometrie von unterschiedlichen Fahrzeugen,
- wobei die Oberfläche des jeweiligen Objekts eine Reifenwand (6) eines Rads (2) des jeweiligen Fahrzeugs ist,
- wobei die Beleuchtungslinien (23) so in Bereichen, die in Längsrichtung des Fahrzeugs vor und hinter einer Radachse (21) des Rads (2) liegen, auf die Reifenwand projiziert werden, dass die Beleuchtungslinien (23) horizontal verlaufen, und
- wobei die Lage einer Radebene (4) des Rads (2) relativ zu den Abbildungsrichtungen (18, 19) anhand der stereo-photogrammetrisch bestimmten Lagen von ausgezeichneten Punkten einer Mehrzahl der Beleuchtungslinien (23) auf der Reifenwand (6) bestimmt wird.

12. Anwendung nach Anspruch 11, **dadurch gekennzeichnet, dass** die Bilder auswertet werden, um aus den Abbildern der Beleuchtungslinien (23) einen Felgendurchmesser (26) und/oder einen Raddurchmesser (25) des Rads (2) zu bestimmen, und dass die definierten Bereiche des jeweiligen Rads, die mit den Auftreffpunkten (36) des Laserstrahls (9) ausgespart werden, und/oder eine Anordnung der Beleuchtungslinien (23) abhängig von dem Felgendurchmesser (26) und/oder dem Raddurchmesser (25) festgelegt wird.

13. Anwendung nach Anspruch 11 oder 12, soweit rückbezogen auf Anspruch 6, **dadurch gekennzeichnet, dass** der Laserstrahl (9) oder ein weiterer Laserstrahl derart abgelenkt wird, dass zusätzliche vertikale Beleuchtungslinien (24) auf eine Kotflügelkante (3) über der Radachse (21) des Rads (2) projiziert werden, wobei dieses Projizieren derart mit den Belichtungen der Bilder synchronisiert wird, dass Abbilder der zusätzlichen Beleuchtungslinien (24) in den Bildern durch während der Belichtung des jeweiligen Bilds aufeinanderfolgende Auftreffpunkte (16) des Laserstrahls (9) auf die Kotflügelkante (3) ausgebildet werden.

14. Vorrichtung zur stereo-photogrammetrischen Vermessung von unterschiedlichen Objekten mit
- einer Lichtquelle (5) zum Projizieren von nebeneinander angeordneten Beleuchtungslinien (23) auf eine Oberfläche des jeweiligen Objekts, wobei die Lichtquelle (5) einen einen Laserstrahl (9) emittierenden Laser (8) aufweist,
- zwei die Oberfläche des Objekts in Bildern aus unterschiedlichen Abbildungsrichtungen (18, 19) abbildenden Kameras (16, 17) und
- einer die Lichtquelle (5) mit den Kameras (16, 17) synchronisierenden Steuerung (15),
**dadurch gekennzeichnet,**
- **dass** die Lichtquelle (5) einen Laserscanner (10) aufweist, der von der Steuerung gesteuert ist und der den zu jedem Zeitpunkt in einem Auftreffpunkt auf die Oberfläche auftreffenden Laserstrahl (9) definiert in Richtung von zwei Raumwinkeln ablenkt, und
- **dass** die Steuerung (15) zur Ausführung des Verfahrens nach einem der vorhergehenden Ansprüche ausgebildet ist.

15. Vorrichtung nach Anspruch 14, **dadurch gekennzeichnet, dass** die Lichtquelle (5) und der Laserscanner (10) Teile einer Wechseleinheit (41) sind, die lösbar an einer eine tragende Struktur (20) und die Kameras (16, 17) umfassenden Haupteinheit (42) befestigt ist.
